## Europäisches Patentamt
## European Patent Office
## Office européen des brevets

(19)

(11) Veröffentlichungsnummer : **0 045 465**
**B1**

(12) **EUROPÄISCHE PATENTSCHRIFT**

(45) Veröffentlichungstag der Patentschrift :
05.10.83

(51) Int. Cl.³ : **B 22 D 11/10, C 21 C 7/076**

(21) Anmeldenummer : **81105885.8**

(22) Anmeldetag : **25.07.81**

(54) **Rohes Flussmittel-Gemisch zum Stranggiessen von Stahl.**

(30) Priorität : **06.08.80 US 175620**

(43) Veröffentlichungstag der Anmeldung :
**10.02.82 Patentblatt 82/06**

(45) Bekanntmachung des Hinweises auf die Patenterteilung : **05.10.83 Patentblatt 83/40**

(84) Benannte Vertragsstaaten :
**AT BE DE FR GB IT NL SE**

(56) Entgegenhaltungen :
**DE A 2 354 560**
**FR A 2 239 308**
**US A 2 825 947**
**US A 3 649 249**
**US A 3 704 744**
**US A 3 899 324**
**US A 3 926 246**
**US A 4 092 159**
**US A 4 190 444**
**US A 4 204 864**
**US A 4 235 632**

(73) Patentinhaber : **Mobay Chemical Corporation**
**Penn Lincoln Parkway West**
**Pittsburgh, Pennsylvania 15205 (US)**

(72) Erfinder : **Loane, Charles M., Jr.**
**405 Harrington Road**
**Bel Air Maryland 21014 (US)**

(74) Vertreter : **Drope, Rüdiger, Dr. et al**
**c/o Bayer AG Zentralbereich Patente Marken und Lizenzen**
**D-5090 Leverkusen 1, Bayerwerk (DE)**

EP 0 045 465 B1

Rohes Flußmittel-Gemisch zum Stranggießen von Stahl

Beim Stranggießen von Stahl, und insbesondere von mit Aluminium beruhigtem Stahl, ist es wünschenswert, eine Oxidation des flüssigen Metalls während des Gießens zu verhindern. Bestandteile der Schmelze wie Eisen, Aluminium, Mangan, Chrom, Titan und dergleichen werden in Oxide umgewandelt, wenn sie der Luft ausgesetzt sind. Diese Oxide sind eine Quelle nichtmetallischer Einschlüsse im erstarrten Metall und können zu schwerwiegenden Fehlern führen. Gleichzeitig verändert der Verlust an solchen Bestandteilen auf Grund des Oxidationsvorgangs die Zusammensetzung der resultierenden Legierung.

Zur Verhinderung einer solchen Oxidation des geschmolzenen Metalls werden während des Stranggießens der Kokille Flußmittel zugesetzt. Diese Flußmittel schmelzen unter Bildung einer Schutzschicht aus flüssigem Flußmittel über der Oberfläche des geschmolzenen Stahls in der Kokille und schließen dadurch den atmosphärischen Sauerstoff aus. Darüber hinaus schmiert diese Schmelze die Wandungen der Kokille und vermindert die Reibung zwischen Kokille und dem erstarrenden Stahlstrang, während dieser kontinuierlich abgezogen wird. Das flüssige Flußmittel dient außerdem zum Auflösen von Oxiden, die zusammen mit dem flüssigen Metall in die Kokille gelangt sind, und ermöglicht dadurch die Erzeugung von sauberem, einschlußfreiem Stahl.

Charakteristisch für Flußmittel dieser Art sind diejenigen, die in den US-PSen 3 649 249, 3 704 744, 3 899 324, 3 926 246, 4 092 159 und 4 204 864 beschrieben wurden.

Bei der Verarbeitung von mit Aluminium beruhigtem Stahl werden beträchtliche Mengen von Aluminiumoxid in dem Flußmittel aufgelöst. Auch wenn der Stahl möglicherweise nur 0,04 % Aluminium enthält, steigt der Aluminiumoxid-Gehalt des Flußmittels in sehr ausgeprägter Weise. So kann sich in einem anfangs kein Aluminiumoxid enthaltenden Flußmittel der Aluminiumoxid-Gehalt auf 25 % erhöhen, womit eine beträchtliche Erhöhung der Viskosität des flüssigen Flußmittels verbunden ist. Tatsächlich kann das Flußmittel so viskos werden, daß es seine Aufgaben, nämlich nichtmetallische Einschlüsse aufzulösen und den Strang während des Abziehens von der Kokille zu schmieren, nicht mehr erfüllt.

Wenn dieser Fall eintritt, kann sich in der Strangschale ein Loch bilden, durch das das gesamte flüssige Metall in der Kokille ausfließen kann (was als « Durchbruch » bezeichnet wird). Dies Problem ist so schwerwiegend, daß es die Beendigung des Gießvorgangs bedingt, und verursacht beträchtlichen Zeitaufwand, bis die Anlage wieder in Betrieb genommen werden kann. Gegenwärtig gibt es zwei Möglichkeiten zur Vermeidung dieses Problems. Die erste Möglichkeit ist, die Anlage anzuhalten und die gesamte geschmolzene Schlacke oder das Flußmittel aus der Kokille mit Hilfe von Abstreifern zu entfernen. Dann wird frisches Kokillenpulver zugesetzt und der Gießvorgang wiederaufgenommen. Diese Möglichkeit ist natürlich etwas gefährlich und kann außerdem dazu führen, daß die weiche metallische (gewöhnlich aus Kupfer bestehende) Auskleidung der Kokille zerkratzt wird. Weiterhin wird bei dieser Möglichkeit das Metall der Oxidation durch die Luft ausgesetzt. Schließlich muß möglicherweise der während der Anhaltezeit der Anlage entstandene Teil des Gusses verworfen werden.

Die zweite Möglichkeit besteht darin, der Kokille ein sehr aggressives Material zuzusetzen, das ein hohes Lösevermögen für Aluminiumoxid besitzt und das viskose Flußmittel verdünnt. Bei sehr sorgfältiger Verfahrensweise kann dieser Kunstgriff eine Fortsetzung des Gießvorgangs ermöglichen, da das alte Flußmittel dabei als schmierender Film mit dem austretenden Strang aus der Kokille entfernt werden würde. Jedoch setzt diese Technik voraus, daß in der Kokille eine gute Vermischung stattfindet. Häufig reagiert das viskose Flußmittel nicht rasch genug mit den Zusatzstoffen. In diesem Fall schmelzen die Zusatzstoffe zu einer Flüssigkeit, die zu dünnflüssig ist, um noch einen Schmierfilm aufrechtzuerhalten, und als Folge davon tritt dann ein Durchbruch ein.

Gemäß der vorliegenden Erfindung ist es möglich, Flußmittel mit Werten der Herty-Fluidität (flowidity) von etwa 40 bis über 50,8 cm (16 bis über 20 (inch)) herzustellen, die die vorerwähnten Schwierigkeiten vermeiden. Die Flußmittel gemäß der Erfindung werden im allgemeinen der Kokille zugesetzt, wenn das Arbeitsflußmittel zu viskos wird. Da die Flußmittel gemäß der Erfindung im wesentlichen mit allen nach dem derzeitigen Stand der Technik verfügbaren Flußmitteln verträglich sind, fluidisieren sie umso rascher die bereits in der Kokille befindliche viskose Schlacke oder das Flußmittel. Gleichzeitig besitzen die Flußmittel gemäß der vorliegenden Erfindung eine genügend hohe Viskosität, so daß sie auch im Überschuß angewendet werden können, ohne daß die Gefahren bestehen, die mit dem Einsatz der nach gegenwärtigem Stand der Technik verwendeten aggressiveren Zusatzstoffe verbunden sind. Wie gezeigt wird, haben die Flußmittel gemäß der vorliegenden Erfindung eine Zusammensetzung, die von allen anderen bekannten und nach dem Stand der Technik verwendeten Flußmitteln für den Strangguß abweicht, und sie sind einzigartig sowohl in bezug auf ihre Zusammensetzung als auch auf ihre Leistungsfähigkeit. Die Flußmittel gemäß der vorliegenden Erfindung sind allgemein zu dünnflüssig, um von Beginn an für den Fluß verwendet zu werden ; sie eignen sich aber sicher für einen Einsatz in der Anfangsphase des Flusses unter besonderen oder ungewöhnlichen Umständen, wie beispielsweise dann, wenn das betreffende Verfahren der Stahlherstellung ein ungewöhnliches Ausmaß der Oxid-Bildung (insbesondere $Al_2O_3$) bedingt, zum Anfahren des Gießstandes, wiederum wenn zusätzliche Oxide anwesend sind, oder wenn eine kleine Kokille und hohe Gußgeschwindigkeit ein niedrig schmelzendes, dünnflüssiges Flußmittel erfordern.

Die Flußmittel-Zusammensetzungen gemäß der Erfindung sind Gemische keramischer Rohmaterialien und/oder Gemische solcher Rohstoffe mit glasartigen Teilchen. Die Zusammensetzungsbreite des Flußmittels sowie der vorteilhaftere Bereich seiner Zusammensetzung ist durch die folgende theoretische Analyse der vorliegenden Oxide (die angegebene Analyse basiert auf der theoretischen Zusammensetzung der durch Schmelzen der Rohstoffe entstandenen Schlacke) gekennzeichnet :

| Bestandteil | breite Zusammensetzung | Bevorzugte Zusammensetzung |
|---|---|---|
| | Gewichts-% | Gewichts-% |
| $K_2O$ | 0 – 5 | 0,25 – 3 |
| $Na_2O$ | 20 – 35 | 22 – 32 |
| CaO | 5 – 25 | 6 – 22 |
| MgO | 0 – 1 | 0,05 – 0,25 |
| $Al_2O_3$ | 3 – 10 | 5 – 9 |
| $B_2O_3$ | 15 – 30 | 16 – 27 |
| $SiO_2$ | 5 – 20 | 6 – 16 |
| F | 10 – 25 | 14 – 21 |
| $Fe_2O_3$ | 0 – 1 | 0 – 0,03 |

Die Prozentsätze werden so gewählt, daß ihre Summe 100 % ergibt.

Beim Vermischen mit glasartigen Flußmitteln sollte die vorstehende Analyse unverändert bleiben. Im allgemeinen können die glasartigen Flußmittel in Mengen zwischen 0 und 60 Gewichts-%, bezogen auf das Gesamtgewicht der Rohstoffe und der glasartigen Flußmittel, verwendet werden.

Ein Verfahren zum Stranggießen unter Verwendung einer bodenlosen Kokille wird dadurch verbessert, daß man die Oberfläche des geschmolzenen Stahls auf der Oberseite der Kokille mit einer Schicht einer solchen Flußmittel-Zusammensetzung bedeckt (die gewöhnlich mit Hilfe einer Kelle aufgebracht und etwa auf einer Dicke von 2,5 cm oder einem Mehrfachen davon (einem bis mehreren inch) gehalten wird).

Bei Einhaltung der angegebenen Grenzen der Zusammensetzung ist die Fluidität (flowidity) des Flußmittels im allgemeinen höher als normalerweise beim Stranggießen von Stahl (d. h. sie beträgt etwa 40 bis über 50,8 cm (16 bis über 20 inch), gemessen nach US-PS 3 649 249).

Die Flußmittel-Gemische können aus den echten Oxiden oder aber vorzugsweise, aus Gründen der Wirtschaftlichkeit, aus deren üblichen keramischen Rohstoff-Äquivalenten, durch einfache Vermischung der erforderlichen Bestandteile hergestellt werden. Beispielsweise können einzelne Rohstoffe dazu eingesetzt werden, einen oder auch mehrere Bestandteile des Flußmittels beizusteuern ; so kann Feldspat sowohl Natriumoxid als auch Siliciumdioxid liefern. In ähnlicher Weise können Natriumcarbonat oder Calciumcarbonat die betreffenden Oxide (d. h. Natriumoxid bzw. Calciumoxid) liefern. Wegen einer möglichen Bildung flüchtiger Fluoride ist jedoch darauf zu achten, daß hydratisierte Verbindungen nicht in nennenswertem Umfang eingesetzt werden. Einer der besonderen Vorteile des Verfahrens liegt auch darin, daß es eine hohe Reinheit der Rohstoffe nicht erfordert und daß die Flußmittel-Präparate gemäß der vorliegenden Erfindung die bei keramischen Verfahren üblichen Anteile an Verunreinigungen enthalten können, ohne daß dadurch ernstere Nachteile entstehen. Zu den typischen derartigen Verunreinigungen zählen Kaliumoxid, Aluminiumoxid und Eisenoxid.

Es wurde gefunden, daß das Flußmittel beim Strangguß-Verfahren einfach in der Weise eingesetzt werden kann, daß man eine Schicht auf der Oberfläche des geschmolzenen Metalls auf der Oberseite der Kokille im Gießstand aufbringt. Eine geeignete Flußmittel-Schicht besitzt zweckmäßig eine Dicke von etwa 2,5 bis 5 cm (1 bis 2 inch) und wird während des Stranggießens durch periodische oder kontinuierliche Zugabe auf dieser Dicke gehalten. Die Menge des eingesetzten Flußmittels liegt pro Tonne Gußstahl charakteristischerweise bei etwa 0,45 kg (1 lb.) und im allgemeinen im Bereich von 0,09 bis 0,68 kg/t (0.2 bis 1.5 lbs./ton). Wie bereits oben festgestellt, sind die Flußmittel gemäß der vorliegenden Erfindung besonders wertvoll als Zusätze zu Arbeistflußmitteln, deren Viskosität zu stark angestiegen ist.

Verschiedene Eigenschaften der Flußmittel gemäß der Erfindung wurden mit Hilfe spezieller Prüfmethoden gemessen. Die Fluidität (flowidity) wurde nach dem in der US-PS 3 649 249 angegebenen Verfahren bestimmt. Die Aluminium-Auflösungs-Kinetik und die Schmelzbereiche wurden mittels Spezialtests gemessen ; die dabei angewandten Verfahren werden im Anschluß an die folgenden Beispiele erläutert.

Die folgenden Beispiele zeigen bevorzugte Ausführungsformen der Erfindung, die jedoch nicht auf diese Anwendungsfälle beschränkt ist. Bei den beschriebenen Anwendungen bezeichnet, sofern nicht anders vermerkt, die Angabe « Teile » Gewichtsteile, die Angabe « % » Gewichts-% ; alle Temperaturangaben erfolgen in °C, in Klammern ergänzt durch die Werte in °F.

Beispiele 1 bis 10

Die angeführten Rohstoffe wurden in den in der folgenden Tabelle angegebenen Mengen gemischt. Die mitgeteilten Analysen beziehen sich auf die theoretische Zusammensetzung der durch Zusammenschmelzen der Rohstoffe wie erwähnt erhaltenen Schlacke. Weiterhin werden die verschiedenen geprüften Eigenschaften aufgeführt.

| Beispiel | 1 | 2 | 3 | 4 | 5 | 6 | 7 | 8 | 9 | 10 |
|---|---|---|---|---|---|---|---|---|---|---|
| **Bestandteile der rohen Schmelze** (Gewichtsteile) | | | | | | | | | | |
| Feldspat | 2,5 | 1,4 | - | - | - | - | - | - | - | - |
| Borax (wasserfrei) | 26,8 | 38,1 | 26,7 | 37,6 | 22,2 | 35,2 | 25 | 37,5 | 25 | 37,5 |
| Kryolith | 13,6 | 31,4 | 13,1 | 30,3 | 17,1 | 32,6 | 25 | 37,5 | 25 | 37,5 |
| Natriumcarbonat | 14,7 | 7,5 | 15,2 | 8,2 | 22,1 | 11,7 | - | - | - | - |
| Flußspat | 21,3 | 10,9 | 13,0 | 6,9 | 13,7 | 7,3 | - | - | - | - |
| Nephelin-Syenit | 8,2 | 4,1 | - | - | - | - | - | - | - | - |
| Wollastonit | 12,9 | 6,6 | - | - | - | - | - | - | - | - |
| Siliciumdioxid | - | - | 13,7 | 7,3 | 14,1 | 7,5 | - | - | - | - |
| Calciumcarbonat | - | - | 14,9 | 7,9 | 5,7 | 3,0 | - | - | - | - |
| Kaliumcarbonat | - | - | 1,3 | 0,7 | 3,9 | 2,1 | - | - | - | - |
| Calciumaluminiumoxid | - | - | 2,1 | 1,1 | 1,2 | 0,6 | - | - | - | - |
| Glasige Fritte A* | - | - | - | - | - | - | 50 | 25 | - | - |
| Glasige Fritte B* | - | - | - | - | - | - | - | - | 50 | 25 |

| Beispiel | 1 | 2 | 3 | 4 | 5 | 6 | 7 | 8 | 9 | 10 |
|---|---|---|---|---|---|---|---|---|---|---|
| **Oxide** (Gewichts-%) | | | | | | | | | | |
| $K_2O$ | 0,54 | 0,26 | 0,97 | 0,48 | 2,88 | 1,40 | 0,97 | 0,48 | 2,88 | 1,40 |
| $Na_2O$ | 23,6 | 28,51 | 24,79 | 29,09 | 29,04 | 31,18 | 24,79 | 29,09 | 29,04 | 31,18 |
| $CaO$ | 21,02 | 10,33 | 18,84 | 9,23 | 13,82 | 6,76 | 18,84 | 9,23 | 13,82 | 6,76 |
| $MgO$ | 0,24 | 0,12 | 0,24 | 0,12 | 0,09 | 0,05 | 0,24 | 0,12 | 0,09 | 0,05 |
| $Al_2O_3$ | 5,51 | 8,08 | 5,54 | 8,04 | 5,44 | 8,0 | 5,54 | 8,04 | 5,44 | 8,0 |
| $B_2O_3$ | 18,65 | 25,36 | 20,28 | 26,18 | 16,61 | 24,39 | 20,28 | 26,18 | 16,61 | 24,39 |
| $SiO_2$ | 13,06 | 6,42 | 14,96 | 7,32 | 15,22 | 7,45 | 14,96 | 7,32 | 15,22 | 7,45 |
| $Fe_2O_3$ | 0,02 | 0,01 | - | - | - | - | - | - | - | - |
| F | 17,36 | 20,98 | 14,38 | 19,54 | 16,90 | 20,77 | 14,38 | 19,54 | 16,9 | 20,77 |
| **Fluidität (flowidity)** cm (inch) | 43,2 (17) | 50,8+ (20+) | 41,0 (16 1/8) | 50,8+ (20+) | 50,8+ (20+) | 50,8+ (20+) | 40,6 (16) | 50,8+ (20+) | 41,3 (16 1/4) | 50,8 (20) |
| **Schmelzbereich** °C (°F) | 788–857 (1450–1575) | 788–843 (1450–1550) | 816–871 (1500–1600) | 802–843 (1475–1550) | 802–843 (1475–1550) | 788–843 (1450–1550) | 802–857 (1475–1575) | 816–871 (1500–1600) | 802–871 (1475–1600) | 802–871 (1475–1600) |
| **Aluminium-Auflösungskinetik** s | 87 | 48 | 63 | 46 | nicht best. | nicht best. | 88 | 91 | 80 | 77 |

*A: Fritte A ist die glasige Fritte aus Beispiel 38 der US-PS 4 204 864.

*B: Fritte B ist die glasige Fritte aus Beispiel 28 der US-PS 4 204 864.

Das bei den vorstehenden Beispielen zur Bestimmung der Schmelzbereiche angewandte Testverfahren erforderte das Einwiegen einer Probe von 3,00 g des zu untersuchenden Gemischs. Die gewogene Probe wurde in eine Pelletform zur Herstellung eines Pellets von 1,27 cm (1/2 inch) Durchmesser in Zylinderform gegeben. Die Form wurde dann in eine hydraulische Presse gestellt und einem Druck von 344,75 bar (5 000 psi) ausgesetzt. Das aus dem Probematerial geformte Pellet wurde dann in die Mitte eines Blechs aus nichtrostendem Stahl von 1,27 mm (0,05 inch) Dicke und einer Größe von 5,08 × 5,08 cm (2 inch × 2 inch) gelegt. Das Blech mit dem Pellet wurde dann in einen Ofen gelegt, in dem das Blech in genau waagerechter Lage gehalten werden konnte (um zu vermeiden, daß das geschmolzene Material von dem Blech herunterläuft). Der Ofen konnte ferner vorgewählte Temperaturen zwischen 816 °C (1 500 °F) und 1 260 °C (2 300 °F) einhalten. Die Probe wurde genau 3,5 Minuten im Ofen belassen.

Nach der Herausnahme aus dem Ofen wurde das Pellet auf Anzeichen von Erweichung, in erster Linie Abrundung der Kanten, untersucht. Bei Vorliegen solcher Anzeichen wurde die Ofentemperatur als untere Temperatur des Schmelzbereichs genommen. Wenn solche Anzeichen nicht beobachtet wurden, wurde die Ofentemperatur um 27,8 °C (50 °F) erhöht und ein neues Pellet bei der neuen Temperatur genau 3,5 Minuten erhitzt. Nachdem die untere Temperatur des Schmelzbereichs bestimmt worden war, wurde die Ofentemperatur weiterhin um jeweils 27,8 °C (50 °F) bis zur Bestimmung der oberen Temperatur des Schmelzbereichs erhöht. Die obere Temperatur des Schmelzbereichs wurde daran deutlich, daß die Probe zu einer dünnen Schmelze, d. h. einer Lache zerfloß, die jede zylindrische Form verloren hatte.

Das zur Bestimmung der Aluminiumoxid-Auflösungskinetik angewandte spezielle Testverfahren erforderte zunächst die Herstellung eines Graphit-Tiegels ohne jegliche Abflußlöcher. Der Tiegel wurde hergestellt, indem ein Loch von 3,81 cm (1,5 inch) Durchmesser und 12,70 cm (5 inch) Tiefe in eine Elektrode aus reinem Graphit von 7,62 cm (3 inch) Durchmesser und 15,24 cm (6 inch) Länge gebohrt wurde. Ein Aluminiumoxid-Rohr mit einem Außendurchmesser von 2,4 mm (3/32 inch) und einem Innendurchmesser von 0,79 mm (1/32 inch) wurde mittels einer mit einem Schleifmittel beschichteten Schneidscheibe auf eine Länge von 1,91 cm (3/4 inch) zugeschnitten. Um das Rohrstück aus Aluminiumoxid zu halten, wurde ein waagerechtes Loch von 2,4 mm (3/32 inch) in 6,4 mm (1/4 inch) Abstand vom Boden eines Stabes aus Graphit von Elektrodenqualität mit einem Durchmesser von 7,9 mm (0,31 inch) und einer Länge von 20,5 cm (8,07 inch) gebohrt.

Eine Probe von 250 g des zu untersuchenden Gemischs wurde in den Tiegel gegeben. Der Tiegel wurde mit einem 7,5 kW-Lepel-Induktionsofen auf eine Temperatur von 1 427 °C (2 600 °F) erhitzt. Während der Tiegel erhitzt wurde, wurde der die Aluminiumoxid-Probe enthaltende Graphitstab über dem Tiegel aufgehängt. Dies gewährleistete eine angemessene Aufwärmperiode, wodurch die Möglichkeit, daß das Aluminiumoxid-Rohr beim Eintauchen in das Gemisch riß, verringert wurde. Jedoch befand sich das Aluminiumoxid hinreichend weit oberhalb des schmelzenden Gemischs, um jede Berührung mit zufälligen Spritzern des Gemischs zu vermeiden, die zur vorzeitigen Auflösung des Aluminiumoxids hätte führen können.

Sobald der Tiegel die von einem optischen Pyrometer angezeigte Temperatur von 1 427 °C (2 600 °F) erreicht hatte, wurde die Probe eingetaucht. Innerhalb von 30 Sekunden oder weniger wurde der Graphitstab hochgezogen, um zu überprüfen, ob die Aluminiumoxid-probe gerissen war. Scharfe unregelmäßige Brüche, gewöhnlich nahe der Probenspitze, würden einen Bruch und die Notwendigkeit angezeigt haben, das Verfahren wieder von Anfang an zu beginnen. Wenn keine Rißbildung erkennbar war, wurde die Probe wieder eingetaucht. Um festzustellen, ob eine Auflösung stattgefunden hatte, wurde der Stab jeweils in Abständen von 15 Sekunden herausgezogen. Auflösung hatte stattgefunden, wenn kein Aluminiumoxid mehr im Stab verblieben war. Der Test wurde mit jeder Probe dreimal durchgeführt, so daß als mitgeteiltes Testergebnis ein Durchschnittswert berechnet werden konnte.

## Ansprüche

1. Flußmittel-Gemisch, bestehend aus einem Gemisch keramischer Rohstoffe, das durch die nachstehende theoretische Analyse auf der Basis der durch Zusammenschmelzen der Rohstoffe gebildeten Zusammensetzung gekennzeichnet ist :

| | |
|---|---|
| $K_2O$ | 0 bis 5 Gewichts-% |
| $Na_2O$ | 20 bis 35 Gewichts-% |
| CaO | 5 bis 25 Gewichts-% |
| MgO | 0 bis 1 Gewichts-% |
| $Al_2O_3$ | 3 bis 10 Gewichts-% |
| $B_2O_3$ | 15 bis 30 Gewichts-% |
| $SiO_2$ | 5 bis 20 Gewichts-% |
| F | 10 bis 25 Gewichts-% |
| $Fe_2O_3$ | 0 bis 1 Gewichts-% |

und in dem die prozentualen Anteile der genannten Bestandteile eine Summe von 100 Gewichts-% ergeben.

2. Flußmittel-Gemisch nach Anspruch 1, dadurch gekennzeichnet, daß es als einen weiteren Bestandteil ein beigemischtes glasiges Flußmittel enthält.

3. Flußmittel-Gemisch nach Anspruch 1, dadurch gekennzeichnet, daß die genannte Analyse die folgenden Werte zeigt, wobei die prozentualen Anteile so gewählt werden, daß ihre Summe 100 % beträgt :

| | | |
|---|---|---|
| $K_2O$ | 0,25- 3 | Gewichts-% |
| $Na_2O$ | 22 -32 | Gewichts-% |
| CaO | 6 -22 | Gewichts-% |
| MgO | 0,05- 0,25 | Gewichts-% |
| $Al_2O_3$ | 5 - 9 | Gewichts-% |
| $B_2O_3$ | 16 -27 | Gewichts-% |
| $SiO_2$ | 6 -16 | Gewichts-% |
| F | 14 -21 | Gewichts-% |
| $Fe_2O_3$ | 0 - 0,03 | Gewichts-% |

4. Verfahren zum Stranggießen von Stahl, wobei man eine Stahlschmelze im oberen Ende einer bodenlosen Stranggußkokille hält, dadurch gekennzeichnet, daß man auf der Oberseite der Stahlschmelze das Flußmittel-Gemisch nach Anspruch 1 schubweise immer dann zusetzt, wenn die Viskosität des Arbeitsflußmittels zu hoch ist.

## Claims

1. Flux mixture consisting of a mixture of ceramic raw materials, which is characterised by the following theoretical analysis based on the composition formed on melting the raw materials :

| | | |
|---|---|---|
| $K_2O$ | 0 to 5 % | by weight |
| $Na_2O$ | 20 to 35 % | by weight |
| CaO | 5 to 25 % | by weight |
| MgO | 0 to 1 % | by weight |
| $Al_2O_3$ | 3 to 10 % | by weight |
| $B_2O_3$ | 15 to 30 % | by weight |
| $SiO_2$ | 5 to 20 % | by weight |
| F | 10 to 25 % | by weight |
| $Fe_2O_3$ | 0 to 1 % | by weight |

and in which the percentages of the indicated ingredients total 100 % by weight.

2. Flux mixture according to Claim 1, characterised in that it contains as an additional ingredient a vitreous flux which is blended into the flux mixture.

3. Flux mixture according to Claim 1, characterised in that the said analysis shows the following values, the percentages being selected such that their total is 100 % :

| | | |
|---|---|---|
| $K_2O$ | 0.25- 3 | % by weight |
| $Na_2O$ | 22 -32 | % by weight |
| CaO | 6 -22 | % by weight |
| MgO | 0.05-0.25 | % by weight |
| $Al_2O_3$ | 5 - 9 | % by weight |
| $B_2O_3$ | 16 -27 | % by weight |
| $SiO_2$ | 6 -16 | % by weight |
| F | 14 -21 | % by weight |
| $Fe_2O_3$ | 0 -0.03 | % by weight |

4. Process for the continuous casting of steel wherein molten steel is maintained in the upper end of a bottomless continuous casting mould, characterised in that the flux mixture according to Claim 1 is added in batches to the top surface of the molten steel whenever the viscosity of the working flux is too high.

## Revendications

1. Mélange de fondants constitué par un mélange de matières premières céramiques qui est caractérisé par l'analyse théorique suivante sur la base de la composition formée par la fusion ensemble des matières premières :

**0 045 465**

| K$_2$O | 0 à 5 % en poids |
|---|---|
| Na$_2$O | 20 à 35 % en poids |
| CaO | 5 à 25 % en poids |
| MgO | 0 à 1 % en poids |
| Al$_2$O$_3$ | 3 à 10 % en poids |
| B$_2$O$_3$ | 15 à 30 % en poids |
| SiO$_2$ | 5 à 20 % en poids |
| F | 10 à 25 % en poids |
| Fe$_2$O$_3$ | 0 à 1 % en poids |

et où les proportions en pourcentage des composants mentionnés donnent une somme de 100 % en poids.

2. Mélange de fondants selon la revendication 1, caractérisé en ce qu'il contient comme autre composant un fondant vitreux ajouté.

3. Mélange de fondants selon la revendication 1, caractérisé en ce que l'analyse mentionnée montre les valeurs suivantes, les proportions en pourcentage étant choisies pour que leur somme atteigne 100 % :

| K$_2$O | 0,25- 3 % en poids |
|---|---|
| Na$_2$O | 22 -32 % en poids |
| CaO | 6 -22 % en poids |
| MgO | 0,05- 0,25 % en poids |
| Al$_2$O$_3$ | 5 - 9 % en poids |
| B$_2$O$_3$ | 16 -27 % en poids |
| SiO$_2$ | 6 -16 % en poids |
| F | 14 -21 % en poids |
| Fe$_2$O$_3$ | 0 - 0,03 % en poids |

4. Procédé pour la coulée continue d'acier, dans lequel on maintient une masse fondue d'acier dans l'extrémité supérieure d'une coquille de coulée continue sans fond, caractérisé en ce qu'on ajoute du côté supérieur de la masse fondue d'acier le mélange de fondants selon la revendication 1 par fournées, lorsque la viscosité du fondant de travail est trop élevée.